# EUROPEAN PATENT APPLICATION

(11) **EP 4 831 626 A1**
(43) Date of publication of application: **28.10.2026**
(21) Application number: 24906143.3
(22) Date of filing: 06.12.2024
(51) Int. Cl.: G01N 23/041

(54) **RADIATION IMAGING DEVICE AND METHOD**

(30) Priority: 21.12.2023 CN 202311771021
(71) Applicant: Tsinghua University, Beijing 100084 (CN); Nuctech Company Limited, TongFang Building Shuangqinglu Road Haidian District Beijing 100084 (CN)
(72) Inventor: CHEN, Zhiqiang, Beijing 100084 (CN); ZHANG, Li, Beijing 100084 (CN); LI, Xinbin, Beijing 100084 (CN); WANG, Zhentian, Beijing 100084 (CN); HUANG, Qingping, Beijing 100084 (CN); SUN, Yunda, Beijing 100084 (CN); SHEN, Le, Beijing 100084 (CN); FENG, Bo, Beijing 100084 (CN)
(74) Representative: Winter, Brandl - Partnerschaft mbB
(86) International application number: PCT/CN2024/137379
(87) International publication number: WO 2025/130659

(57) **Abstract**

A radiation imaging apparatus and a radiation imaging method. The radiation imaging apparatus includes: a radiation source (S), N rows of detectors (DT), and one or more gratings (G) arranged between the radiation source (S) and the N rows of detectors (DT) and in an inspection channel defined by the radiation source (S) and the N rows of detectors (DT). Each of the N rows of detectors (DT) extends along a transverse direction of the inspection channel, and the N rows of detectors (DT) are arranged along the inspection channel. The grating (G) extends in a plane substantially parallel to a plane where the N rows of detectors (DT) are arranged. The gratings (G) are provided with a periodic structure configured to diffract rays passing through the grating (G) to generate an interference fringe. An extension direction of a structural unit of the periodic structure forms a non-zero angle with an extension direction of the inspection channel.

## Description

This application claims the benefit of priority to Chinese Patent Application No. 202311771021.9 filed on December 21, 2023, the entire contents of which are incorporated herein by reference.

### TECHNICAL FIELD

The present disclosure relates to a field of detection technology, and more specifically, relates to a radiation imaging apparatus.

### BACKGROUND

Since the introduction of grating imaging technology, the most commonly used scanning method has been phase-stepping scanning. Specifically, during each scan, an object under inspection and an imaging system are required to remain stationary, and one of the gratings is moved to obtain a phase-stepping curve, from which three types of image information, namely absorption, phase, and small-angle scattering information, may be extracted. Such an existing scanning method has limited the practical application of grating imaging technology. There is an urgent need to improve scanning efficiency so as to satisfy requirements of practical production and daily life.

The existing phase-stepping scanning method is highly time-consuming and is unsuitable for the requirements of practical application scenarios. It is desirable to provide a grating imaging apparatus and method having improved efficiency and capable of providing more information.

### SUMMARY

According to an aspect of the present disclosure, a radiation imaging apparatus is provided, including: a radiation source configured to emit a radiation beam; N rows of detectors configured to receive the radiation beam from the radiation source, where the radiation source and the N rows of detectors define an inspection channel, and N is an integer greater than 1; and one or more gratings arranged in the inspection channel and between the radiation source and the detectors in the inspection channel; where each row of the N rows of detectors extends along a transverse direction of the inspection channel, the N rows of detectors are arranged along an extension direction of the inspection channel, the one or more gratings extend in a plane substantially parallel to a plane in which the N rows of detectors are arranged, the one or more gratings are provided with a periodic structure configured to diffract rays to generate an interference fringe, and an extension direction of a structural unit of the periodic structure forms a non-zero angle with the extension direction of the inspection channel.

In an embodiment, the radiation imaging apparatus is configured to perform N exposures on a portion of an object under inspection with the radiation source emitting the radiation beam N times and the N rows of detectors detecting radiation signals transmitted through the portion of the object under inspection, when the object under inspection moves along the inspection channel, and wherein a number of exposures is equal to a number of rows of detectors.

In an embodiment, the exposures are intermittent, and a movement distance of the portion of the object under inspection within a time interval between start time instants of two adjacent exposures is equal to a spacing between respective leading edges of adjacent rows of detectors, and the exposures include a plurality of intermittent exposures having a same exposure period.

In an embodiment, for the portion of the object under inspection, the radiation imaging apparatus is configured to generate at least one of an absorption image, a phase image, or a small-angle scattering image related to at least a partial region of the object under inspection by using a first extraction algorithm to process exposure data from a first row of detectors among the N rows of detectors obtained at a first exposure, exposure data from an i-th row of detectors among the N rows of detectors obtained at an i-th exposure, and exposure data obtained at other completed exposures which serve as exposure data related to the partial region of the object under inspection, and wherein i is an integer and 1 < i ≤ N.

In an embodiment, the radiation imaging apparatus is configured to perform an exposure on an object under inspection with the radiation source emitting the radiation beam to irradiate the object under inspection and the N rows of detectors detecting radiation signals transmitted through the object under inspection, when the object under inspection remains stationary in the inspection channel.

In an embodiment, for at least a partial region of the object under inspection, the radiation imaging apparatus is configured to: extract, using a second extraction algorithm, exposure data from M adjacent rows of detectors among the N rows of detectors based on exposure data from each of the N rows of detectors, and combine the exposure data from M adjacent rows of detectors into a set of exposure data, so as to obtain N-M+1 sets of exposure data; and generate at least one of an absorption image, a phase image, or a small-angle scattering image related to the partial region of the object under inspection based on the N-M+1 sets of exposure data, and wherein M is an integer and 1 ≤ M ≤ N.

In an embodiment, the one or more gratings include a first grating arranged between an object under inspection and the N rows of detectors.

In an embodiment, the one or more gratings further include a second grating arranged between the object under inspection and the radiation source.

In an embodiment, the one or more gratings further include a third grating arranged between the object under inspection and the N rows of detectors, and where a distance between the third grating and the N rows of detectors is different from a distance between the first grating and the N rows of detectors.

In an embodiment, the N rows of detectors are spaced apart from each other along the inspection channel at equal predetermined intervals, or are arranged closely adjacent to each other.

In an embodiment, the radiation source is a distributed multi-point source and is configured to irradiate the object under inspection with a plurality of point sources of the distributed multi-point source emitting radiation beams from a plurality of angles.

In an embodiment, the plurality of point sources of the distributed multi-point source are configured to emit the radiation beams separately to perform multiple exposures on the object under inspection.

According to another aspect of the present disclosure, a radiation imaging method is provided, including: irradiating an object under inspection using a radiation source; and receiving, using N rows of detectors, a radiation beam from the radiation source, where the radiation source and the N rows of detectors define an inspection channel, and N is an integer greater than 1; where each row of the N rows of detectors extends along a transverse direction of the inspection channel, the N rows of detectors are arranged along an extension direction of the inspection channel, the one or more gratings extend in a plane substantially parallel to a plane where the N rows of detectors are arranged, the one or more gratings are provided with a periodic structure configured to diffract rays to generate an interference fringe, and an extension direction of a structural unit of the periodic structure forms a non-zero angle with the extension direction of the inspection channel.

In an embodiment, the object under inspection moves along the inspection channel within the inspection channel, or the object under inspection remains stationary in the inspection channel.

It should be understood that the content described in this section is not intended to identify key or essential features of embodiments of the present disclosure, nor is it intended to limit the scope of the present disclosure. Other features of the present disclosure will become readily understandable through the following description.

### BRIEF DESCRIPTION OF THE DRAWINGS

The accompanying drawings are provided for better understanding of the present solution and do not constitute any limitations to the present disclosure, in which:
FIG. 1 shows an example of an arrangement of gratings in a radiation imaging apparatus;
FIG. 2 shows an example of a radiation imaging process, in which a grating is moved in a stepping manner;
FIG. 3 shows a schematic diagram of radiation imaging according to an embodiment of the present disclosure, in which an object under inspection moves through an inspection channel;
FIG. 4 shows a radiation imaging process according to an embodiment of the present disclosure, including information extraction based on multiple exposures;
FIG. 5 shows a schematic diagram of radiation imaging according to an embodiment of the present disclosure, in which an object under inspection remains stationary in an inspection channel;
FIG. 6 shows a radiation imaging process according to an embodiment of the present disclosure, including information extraction based on a single exposure; and
FIG. 7 shows two-dimensional images for absorption *T* (a), phase Φ (b), and small-angle scattering *D* (c) acquired using the apparatus according to the present disclosure, as well as corresponding XY-plane slice images of three-dimensional images for linear attenuation coefficient *µ* (d), refractive index decrement *δ* (e), and linear diffusion coefficient *ζ* (f) reconstructed using an FBP algorithm from 360 projections acquired over one rotation.

### DETAILED DESCRIPTION OF EMBODIMENTS

To more clearly describe the objectives, technical solutions, and advantages of the present disclosure, embodiments of the present disclosure will be described in detail below with reference to the accompanying drawings. It should be understood that the following description of embodiments is intended to explain and illustrate the general concept of the present disclosure and should not be construed as limiting the present disclosure. In the specification and the accompanying drawings, the same or similar reference numerals denote the same or similar components or members. For purposes of clarity, the drawings are not necessarily drawn to scale, and certain well-known components and structures may be omitted from the drawings.

Unless otherwise defined, technical or scientific terms used herein shall have the meanings commonly understood by a person having ordinary skill in the art to which the present disclosure pertains. Terms such as "first", "second", and similar expressions used herein do not indicate any order, quantity, or importance, but are merely used to distinguish different components. Terms "a" and "an" do not exclude the presence of multiple items. Terms such as "comprising", "including", or similar expressions indicate that the element or item preceding the word encompasses the element or item listed thereafter as well as equivalents thereof, but does not exclude additional elements or items. Terms such as "connected", "coupled", or similar expressions are not limited to physical or mechanical connections and may include electrical connections, whether direct or indirect. Terms such as "upper", "lower", "left", "right", "top", "bottom", and the like are used only to indicate relative positional relationships, and such relative positional relationships may change when the absolute position of the described object changes. When an element such as a layer, film, region, or substrate is described as being arranged "on" or "under" another element, the element may be directly on or under the other element, or one or more intermediate elements may be present therebetween.

The present disclosure provides a fast grating imaging system that utilizes N rows of detectors and a grating arranged before (upstream of) the detectors, thereby enabling extraction of three types of information, namely absorption, phase, and small-angle scattering information, from projection data. Because the rays are modulated by the grating, detector elements (which may be, for example, pixels) in different detectors among the multiple rows of detectors receive different modulated rays. For example, the modulated rays may exhibit fringe characteristics. The modulated rays serve as a "carrier", and a periodicity resulting from their profiles differs from a periodicity of the N rows of detectors. Different structures may be calculated through an information extraction algorithm, and the calculation and solution process may be understood as a process similar to demodulation. The principle of applying a grating in radiographic imaging will first be described below.

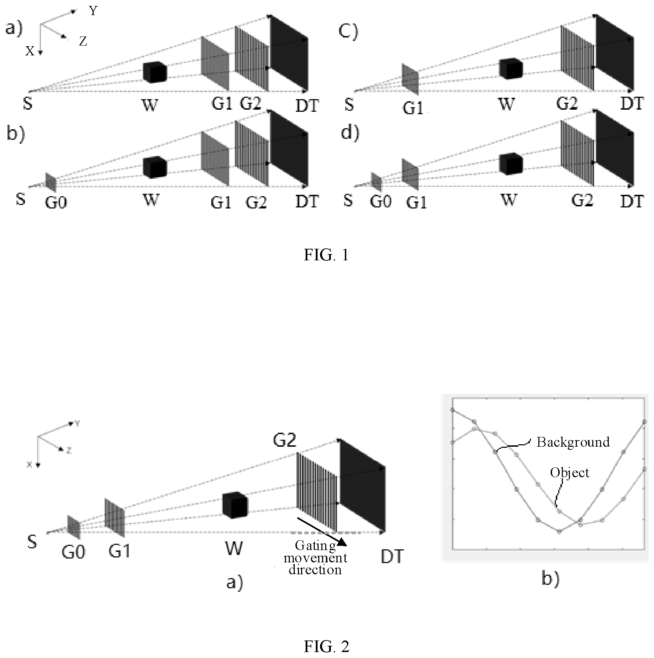

In (a), (b), (c), and (d) of FIG. 1, various grating imaging arrangements are shown, G1, G2, and G3 represent three gratings, which are arranged between a source S and an object under inspection W or between an object under inspection W and a detector DT as shown.

In grating imaging technology, both the wave nature and the particle nature of X-rays may be utilized to acquire three types of characteristic information, namely absorption information, phase information, and small-angle scattering information, where the absorption information and the phase information respectively correspond to an imaginary part *β* and a real part *δ* of a complex refractive index *n*. $n = 1 - δ + iβ$ (1) where a linear attenuation coefficient µ has a linear relationship with the imaginary part β (λ represents a wavelength of the X-rays). $μ = \frac{4 πβ}{λ}$ (2)

The three types of characteristic information of absorption *T*, phase Φ, and small-angle scattering *D* may be respectively regarded as integrals of the linear attenuation coefficient µ, the refractive index decrement *δ*, and the linear diffusion coefficient ζ (where *L* represents a propagation path of X-rays, and *c*_{Φ} and *c_{D}* are both constant values related to the imaging system). $\left\{\begin{matrix}T = exp \left(-{\int }_{L} μ \left(\vec{r}\right) d \vec{r}\right) \\ Φ = {c}_{Φ} ⋅ \frac{\partial }{\partial x} \left({\int }_{L} δ \left(\vec{r}\right) d \vec{r}\right) \\ D = {c}_{D} ⋅ exp \left(-{\int }_{L} ζ \left(\vec{r}\right) d \vec{r}\right)\end{matrix}\right.$ (3)

Considering that X-rays generally exhibit an energy spectrum distribution, and assuming that a normalized energy spectrum distribution is represented by *S*(*E*), Equation (3) may be expressed as: $\left\{\begin{matrix}T = {\int }_{{E}_{0}}^{{E}_{1}} S \left(E\right) ⋅ exp \left(-{\int }_{L} μ \left(\vec{r}, E\right) d \vec{r}\right) dE \\ Φ = {c}_{Φ} ⋅ {\int }_{{E}_{0}}^{{E}_{1}} S \left(E\right) ⋅ \frac{\partial }{\partial x} \left({\int }_{L} δ \left(\vec{r}, E\right) d \vec{r}\right) dE \\ D = {c}_{D} ⋅ {\int }_{{E}_{0}}^{{E}_{1}} S \left(E\right) ⋅ exp \left(-{\int }_{L} ζ \left(\vec{r}, E\right) d \vec{r}\right) dE\end{matrix}\right.$ (4)

In (a) of FIG. 1, the grating G1 may function to form a self-imaging fringe pattern along a downstream optical path. When X-rays interact with a substance, the self-imaging fringe pattern may undergo local distortion and deformation. Such deformation occurs on a micrometer scale or even a sub-micrometer scale, which is beyond the resolution that is achieved by ordinary detectors. Therefore, grating G2 amplifies the signal. By observing variations in the intensity of the detector signal, three characteristic images of absorption, phase, and small-angle scattering may be extracted. When a focal spot of the X-ray source is sufficiently small (e.g., in a synchrotron radiation source or a micro-focus X-ray source), only gratings G1 and G2 are required, as shown in (a) and (c) of FIG. 1

When the focal spot of the X-ray source has a large size (e.g., in an existing X-ray source), the resulting blurring effect may deteriorate the imaging effect. Therefore, a grating G0 may be added downstream of the X-ray source. Due to the presence of grating G0, the radiation beams emitted by the X-ray source may be converted into a series of partially coherent micrometer-scale linear radiation beams, as shown in (b) and (d) of FIG. 1.

An object under inspection W may be positioned between grating G0 and grating G1 (as shown in (b) of FIG. 1), or between grating G1 and grating G2 (as shown in (c) and (d) of FIG. 1).

When the object under inspection W is positioned between gratings G0 and G1, as shown in (b) of FIG. 1, in this configuration, stronger phase signals and small-angle scattering signals may be obtained, resulting in higher imaging contrast and sensitivity. However, this configuration also has certain disadvantages, that is, grating G1 has a large area and incurs higher cost. In addition, X-rays transmitted through the object under inspection W may be blocked by gratings G1 and G2 before being received by the detector, resulting in low X-ray utilization efficiency.

When the object under inspection W is positioned between gratings G1 and G2, as shown in (c) and (d) of FIG. 1, in this configuration, grating G1 is located close to the light source and may have a small area and low cost. Furthermore, X-rays transmitted through the object under inspection W are blocked only by grating G2, resulting in higher X-ray utilization efficiency. However, the phase signals and small-angle scattering signals obtained in this configuration are somewhat weaker. Nevertheless, for certain strongly scattering substances, this is less likely to cause detector signal saturation.

The absorption image (the above T) reflects attenuation characteristics of the substance with respect to X-rays, corresponding to the imaginary part *β* of the complex refractive index of the substance for X-rays (complex refractive index *n* = 1 - *δ* + *iβ*). The phase image reflects refraction effects of the substance on X-rays, corresponding to the real part *δ* of the complex refractive index of the substance for X-rays. For weakly absorbing substances, the phase image advantageously provides higher contrast than the absorption image, and *δ* may be higher than *β* by 2 to 3 orders of magnitude. Accordingly, weakly absorbing substances may be displayed more clearly through the phase image. The small-angle scattering image reflects a mesoscopic structural information of the substance and is highly sensitive to differences at micrometer scale or sub-micrometer scale, such as porosity and multi-fiber structures. Accordingly, the small-angle scattering image may break through the resolution limitations of absorption imaging. The phase image and the small-angle scattering image are valuable supplements to the absorption image, which may effectively improve the overall imaging effect and resolving capability for the object under inspection W, and enhance the adaptability and accuracy of the inspection process for different substances.

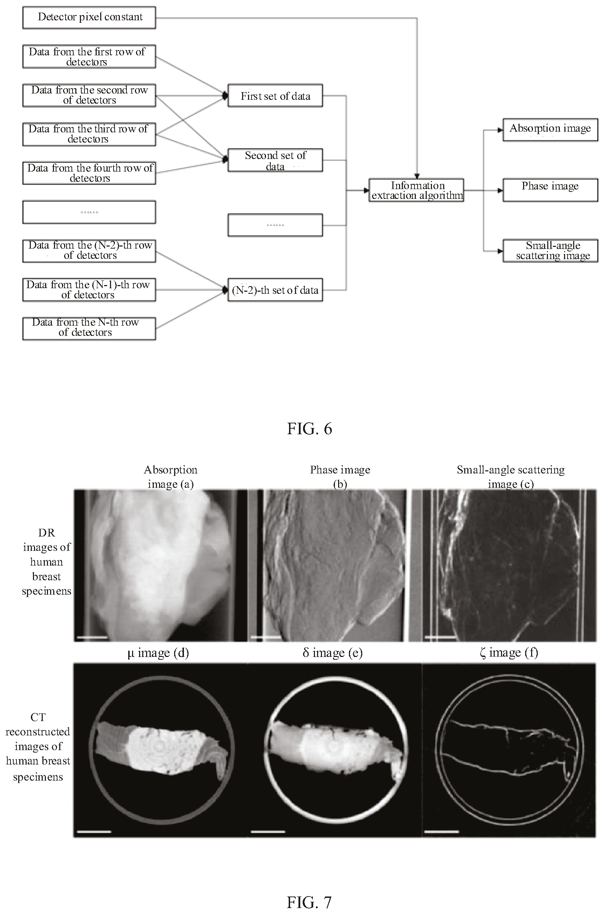

FIG. 7 shows two-dimensional images for absorption *T* (a), phase Φ (b), and small-angle scattering *D* (c), as well as corresponding XY-plane slice images of three-dimensional images for linear attenuation coefficient *µ* (d), refractive index decrement *δ* (e), and linear diffusion coefficient *ζ* (f) reconstructed using FBP algorithm from 360 projections acquired over one rotation (corresponding to Equation (3) of the technical disclosure document). The absorption image (corresponding to the linear attenuation coefficient *µ*) reflects attenuation characteristics of the substance. The phase image (corresponding to the refractive index decrement *δ* in the complex refractive index) provides higher contrast for weakly absorbing substances and reflects a texture information of internal and external structures of the object under inspection W. The small-angle scattering image (corresponding to the linear diffusion coefficient *ζ*) reflects the mesoscopic structural information of the substance and reflects microscopic structures such as porosity and multi-fiber structures at the micrometer/sub-micrometer scale.

In an existing grating imaging system, the object under inspection W is required to remain stationary, and one of the three gratings is moved to obtain a displacement curve corresponding to each pixel, thereby extracting three types of information, namely absorption, phase, and small-angle scattering information for each pixel.

For example, as shown in (a) of FIG. 2, the object under inspection W remains stationary while one of the gratings (e.g., grating G2) is moved. Multiple measurement results may be obtained for each detector pixel, corresponding to the displacement curve shown in (b) of FIG. 2. A result obtained by scanning in the absence of an object is referred to as a "background displacement curve", while a result obtained by scanning in the presence of an object is referred to as an "object displacement curve". These two displacement curves are utilized to extract multi-characteristic image information.

A disadvantage of this method is that movement of the grating is required and the scanning process is highly time-consuming, making it unsuitable for practical application requirements.

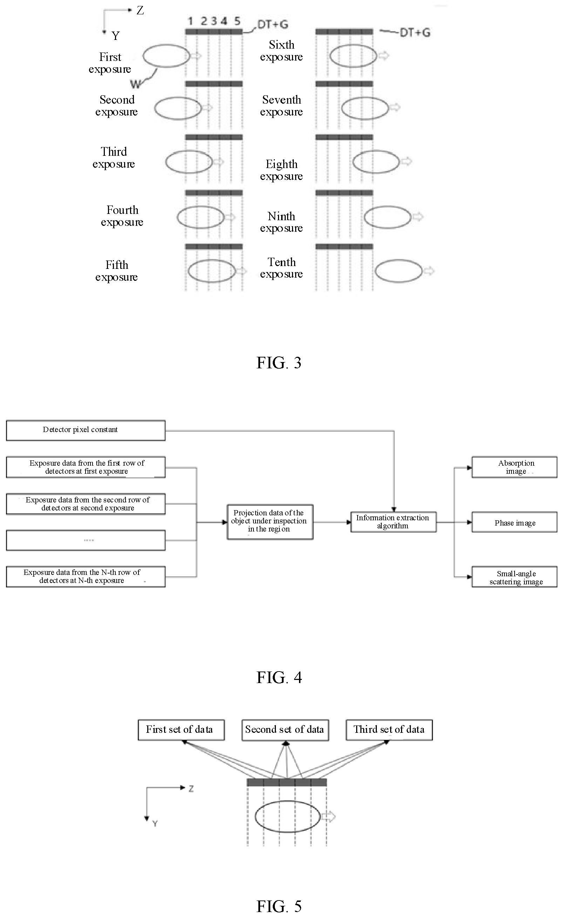

As shown in FIG. 3, according to an embodiment of the present disclosure, a grating imaging apparatus includes a radiation source S, a plurality of rows of detectors DT, and one or more gratings G. As shown in FIG. 3, the detector DT and the grating G are illustrated together as DT-G. However, in practice, the detector DT and the grating G are separate components, and FIG. 3 merely schematically illustrates the arrangement of the plurality of rows of detectors DT. Furthermore, in FIG. 3, the Z direction is the direction in which the plurality of rows of detectors DT are arranged. For example, five rows of detectors DT may be arranged along the Z direction. The detectors shown in FIG. 3 may be regarded as end portions of the respective rows of detectors DT. The grating G is arranged in the vicinity of the detectors DT. For example, the grating G may be arranged adjacent to the detectors DT and extend along the Z direction. In an embodiment, the grating G is arranged parallel to the plurality of rows of detectors DT.

For convenience of description, the present disclosure uses the expression "N rows" to represent the plurality of rows, where N is an integer greater than 1, such as 2, 3, 4, 5, 6, 7, or a larger integer. The example shown in FIG. 3 corresponds to a case where N is equal to 5. An appropriate integer N may be selected according to practical requirements and cost considerations to determine the number of detector rows. Furthermore, in the description, i is an integer selected from 1 to N to represent a particular row of detectors among the N rows of detectors. Those skilled in the art will appreciate that this is an existing mathematical notation. It should be understood that the use of "N rows" to represent the concept of multiple rows is merely for convenience of description and does not carry any other special meaning. The radiation source S may emit a radiation beam, for example, an X-ray source configured to emit an X-ray beam. Here, the radiation source S may include a collimator configured to cause the radiation beam to have a desired shape or form. The N rows of detectors are used to receive the radiation beam emitted from the radiation source S and sense characteristics of the radiation beam, such as intensity, by means of radiation-sensitive elements. The radiation source S and the detectors define an inspection channel. The object under inspection W may be irradiated by the radiation source S within the inspection channel, and the radiation beam transmitted through the object under inspection W may be detected by the N rows of detectors, so as to determine various properties and contours of the object under inspection W.

Each of the N rows of detectors extends along a transverse direction of the inspection channel (i.e., a direction perpendicular to the Y-Z plane), and the N rows of detectors are arranged along an extension direction of the inspection channel (the Z direction). For example, as shown in FIG. 3, the arrow indicates the direction in which the inspection channel extends, which is also the direction in which the object under inspection W moves within the inspection channel, namely the Z direction. The N rows of detectors are arranged along the direction indicated by the arrow (the Z direction). FIG. 3 shows an example in which five rows of detectors are arranged along the inspection channel. Each row of detectors DT extends along the transverse direction of the inspection channel. In the cross-sectional view shown in FIG. 3, an end surface of each row of detectors DT is visible, and each row of detectors DT extends into the plane of the drawing. FIG. 3 shows that the five rows of detectors are densely arranged, that is, adjacent rows of detectors are arranged in contact with each other. However, in other embodiments, adjacent rows of detectors may be spaced apart from each other, in other words, gaps may exist between adjacent rows of detectors.

In embodiments of the present disclosure, the grating imaging apparatus includes one or more gratings arranged between the radiation source S and the detectors in the inspection channel. The one or more gratings are provided with a periodic structure used to diffract rays to generate one or more interference fringes. The periodic structure may include, for example, periodic slits. In other words, a structural unit of the periodic structure may be a slit. Rays or light passing through the slits undergo diffraction and are thus altered. To a certain extent, the rays may be regarded as being modulated by the periodic structure. Here, the periodic structure may include, for example, slits. Taking the periodic structure including slits as an example, a periodic direction of the periodic structure may be an arrangement direction of the plurality of slits. For example, in an embodiment in which the periodic structure includes slits, the structural unit of the periodic structure may be an individual slit. When an extension direction of the structural unit of the periodic structure forms a very small angle (e.g., relative to being parallel to the inspection channel), for example, 10⁻⁴ degree, with the inspection channel (i.e., the extension direction of the inspection channel), interference fringes or moiré fringes generated by the periodic structure formed by the arrangement of the plurality of slits may change significantly. Therefore, the requirements of the present disclosure may be satisfied as long as the extension direction of an individual slit forms a very small angle with the inspection channel. In a specific embodiment, for example, the extension direction of an individual slit may be transverse to the extension direction of the inspection channel (i.e., the Z direction), i.e., perpendicular to the inspection channel. In such a case, the arrangement direction of the slits (i.e., the periodic direction of the periodic structure) is parallel to the extension direction of the inspection channel, that is, the arrangement direction of the slits extends along the Z direction. In other embodiments, the periodic structure may include other structures instead of slits, such as materials capable of generating fringe patterns. In FIG. 3, the detectors and the grating are shown as an integrated structure merely for convenience of illustrating the detector arrangement and the movement of the object under inspection W. In practice, the grating may be located upstream of the detectors facing the radiation beam, for example, adjacent to the detectors, or at a position spaced apart from the detectors by a predetermined distance, such as between the object under inspection W and the source S.

In the present disclosure, the one or more gratings may include a single grating. For example, the grating may be arranged adjacent to the detectors, such that the radiation transmitted through the object under inspection W passes through the grating before being detected by the detectors. In another embodiment, the grating may be located between the detectors and the object under inspection W, and spaced apart from the detectors by a predetermined distance.

In an embodiment, a grating may be arranged adjacent to the radiation source S. In an embodiment, the one or more gratings may include two gratings, both of which are arranged between the detectors and the object under inspection W. In another embodiment, the two gratings may be respectively arranged between the detectors and the object under inspection W and between the object under inspection W and the radiation source S.

In an embodiment, the one or more gratings may include three gratings, two of which are arranged between the detectors and the object under inspection W, and one of which is arranged between the object under inspection W and the radiation source S. In another embodiment, the one or more gratings may include three gratings, one of which is arranged between the detectors and the object under inspection W, and two of which are arranged between the object under inspection W and the radiation source S. FIG. 1 shows schematic diagrams of various arrangements of gratings between the radiation source S and the detectors. In the present disclosure, the grating may have a grating surface.

In an embodiment, a first grating is arranged between the object under inspection and the N rows of detectors. In an embodiment, a second grating is arranged between the object under inspection and the radiation source. In an embodiment, a third grating is arranged between the object under inspection and the N rows of detectors. A distance between the third grating and the N rows of detectors is different from a distance between the first grating and the N rows of detectors. To avoid complexity in the drawings, the specific forms of the gratings are not illustrated herein. However, embodiments of the present disclosure may be implemented with reference to the arrangements of gratings described above with reference to FIG. 1.

In an embodiment of the present disclosure, the object under inspection W may move in the inspection process of the object under inspection W. The exposure and imaging process during movement will be described below. Assuming that the object under inspection W moves at a constant velocity v, and that a time interval between two successive exposures is Δt, then a displacement of the object under inspection W within the time interval between the two exposures is l=vΔt. Assuming that a center-to-center spacing between adjacent rows of detectors is Δ_{det}, the scanning method of the grating imaging apparatus according to such embodiments satisfies the following equation: ${Δ}_{det} = v ⋅ Δ t$ (5)

The above equation means that, with the time interval between the start time instants of two successive exposures, a corresponding portion or unit of the object under inspection W moves by exactly the spacing between adjacent rows of detectors (i.e., a distance between leading edges of two adjacent rows of detectors, or a distance between centers or trailing edges of two adjacent rows of detectors). This ensures that the portion or unit of the scanned object detected by a first row of detectors at a first exposure, a second row of detectors at a second exposure, a third row of detectors at a third exposure, and so on, is the same. Here, it should be noted that an exposure refers to a process beginning when the detectors are enabled to detect radiation signals and ending when the detectors are disabled to terminate detection. In this process, the radiation source S may continuously irradiate the object under inspection W. Alternatively, the radiation source S may emit pulsed radiation beams synchronized with the detection period of the detectors, or not synchronized therewith, in which case the radiation source S does not continuously irradiate the object under inspection W. It should further be noted that the foregoing relationship between movement and exposure is actually directed to a portion or unit of the object under inspection, rather than the number of times that the entire object under inspection is exposed. For example, when the object under inspection has a large volume, the number of times that the object under inspection is exposed during passage through the five rows of detectors shown in FIG. 3 will exceed five.

In an embodiment of intermittent exposure, each exposure cycle includes an exposure period and a remaining period. One exposure is completed within the time interval between the start time instants of two successive exposures, or the time interval between the start time instants of two successive exposures constitutes one exposure cycle. During each exposure cycle, the object under inspection W may be irradiated with pulsed radiation beams in the exposure period, while in the remaining period (before the next exposure begins), the object under inspection W continues to move, but is not irradiated by the radiation beams.

For an arbitrary detector pixel, the signal intensity may be expressed as a cosine function: ${I}_{i , j , k} = {I}_{i , j}^{0} ⋅ {T}_{k} ⋅ \left[1+{V}_{i , j}^{0}⋅{D}_{k}⋅cos\left({ϕ}_{i , j}^{0}-{ϕ}_{k}\right)\right]$ (6) where i represents an i-th pixel among pixels of the j-th row of detectors, and k represents a k-th exposure. For a given pixel, ${I}_{i , j}^{0} , {V}_{i , j}^{0} , {ϕ}_{i , j}^{0}$ are only related to the pixel itself and independent of the object under inspection W, and are referred to as "detector constants". *Tₖ, Dₖ, ϕₖ* are only related to the object under inspection W and independent of the pixel itself, and are referred to as "multi-characteristic information", which are respectively related to absorption, small-angle scattering, and phase information. When no object under inspection W is present in the inspection channel, *Tₖ =* 1, *Dₖ* = 1, *ϕₖ* = 0, thus: ${I}_{i , j}^{air} = {I}_{i , j}^{0} ⋅ \left[1+{V}_{i , j}^{0}⋅cos\left({ϕ}_{i , j}^{0}\right)\right]$ (7)

In embodiments of the present disclosure, the object under inspection W may move. During movement of the object under inspection W, the radiation source S emits radiation beams to expose the object under inspection W. The moving speed of the object under inspection W is coordinated with the spacing of the detector rows such that the distance traveled by the object under inspection W within the time interval between the start time instant of a first exposure and the start time instant of a second exposure is equal to the spacing between the leading edges (or trailing edges) of adjacent rows of detectors.

When the object under inspection W moves as described above, a first extraction algorithm is used for data processing. As shown in FIG. 4, at a first exposure, first exposure data from the first row of detectors are obtained, at a second exposure, second exposure data from the second row of detectors are obtained, and so on, until at an N-th exposure, N-th exposure data from the N-th row of detectors are obtained. The first to N-th exposure data obtained from the multiple exposures are separately substituted into Equation (3), where each exposure data may be substituted into one equation, and at least three exposure data are used to construct a system of equations. The system of equations may then be solved using an optimization method to determine the results of absorption *T*, phase Φ, and small-angle scattering D. Alternatively, those skilled in the art may employ other known solution methods, such as Fourier transform, to solve the system of equations.

In embodiments of the present disclosure, the object under inspection W remains stationary within the inspection channel. As shown in FIG. 5, a single exposure is performed on the object under inspection W, and corresponding exposure data are acquired by each row of the N rows of detectors. In this case, a second extraction algorithm is used for data processing. Specifically, as shown in FIG. 6, based on a single exposure, a first set of exposure data from the first row of detectors is obtained, a second set of exposure data from the second row of detectors is obtained, and an N-th set of exposure data from the N-th row of detectors is obtained. At this point, the unknown variables related to several adjacent rows of detectors are assumed to be identical ("spatial downsampling"). Therefore, several sets of exposure data from several adjacent rows of detectors, such as three sets of exposure data from three adjacent rows of detectors, may be used as a combination to solve the system of equations. In other embodiments, exposure data from M adjacent rows of detectors among the N rows of detectors may be extracted and combined into one set of exposure data, thereby obtaining N-M+1 sets of exposure data. Based on the N-M+1 sets of exposure data, at least one of an absorption image, a phase image, or a small-angle scattering image related to at least a partial region of the object under inspection W may be generated.

In an embodiment of the present disclosure, two rows of detectors are provided. Generally, a grating imaging system may simultaneously obtain three types of information, namely absorption T, phase Φ, and small-angle scattering D. However, under certain imaging conditions, the phase information Φ or the small-angle scattering information D of the object under inspection may vary slowly in spatial distribution, or the corresponding signal may be relatively weak. Thus, such information may be treated as a constant. Accordingly, only two unknown quantities need to be considered in the information extraction process. For example, in an embodiment, if the phase information Φ varies slowly in spatial distribution or the phase signal is relatively weak, only the absorption information T and the small-angle scattering information D are considered. In an embodiment, if the small-angle scattering information D varies slowly in spatial distribution or the small-angle scattering signal is relatively weak, only the absorption information T and the phase information Φ are considered. In such embodiments, only two rows of detectors are required (i.e., N=2). The data acquisition process is identical to that in the case of N≥3, except that the number of rows of detectors is reduced.

In the present disclosure, a radiation imaging method is provided, including: irradiating an object under inspection W using a radiation source S; and receiving, using N rows of detectors, a radiation beam from the radiation source S, where the radiation source S and the N rows of detectors define an inspection channel, and N is an integer greater than 1. In such embodiments, each row of the N rows of detectors extends along a transverse direction of the inspection channel, the N rows of detectors are arranged along an extension direction of the inspection channel, the one or more gratings extend in a plane substantially parallel to a plane where the N rows of detectors are arranged, the one or more gratings are provided with a periodic structure used to diffract rays to generate one or more interference fringes, and an extension direction of a structural unit of the periodic structure forms a non-zero angle with the extension direction of the inspection channel.

In an embodiment, the object under inspection W moves along the inspection channel within the inspection channel, or the object under inspection W remains stationary in the inspection channel.

As the object under inspection W moves within the inspection channel, multiple exposures are performed, and the first extraction algorithm is used to generate at least one of an absorption image, a phase image, or a small-angle scattering image related to at least a partial region of the object under inspection W. As the object under inspection W remains stationary in the inspection channel, the second extraction algorithm is used to generate at least one of an absorption image, a phase image, or a small-angle scattering image related to at least a partial region of the object under inspection W based on N-M+1 sets of exposure data. Reference may be specifically made to the foregoing description.

It should be appreciated that according to embodiments of the present disclosure, the object under inspection W may move and then remain stationary within the inspection channel. In such a case, the first extraction algorithm may be used to process the exposure data obtained when the object under inspection W moves, so as to generate at least one of an absorption image, a phase image, or a small-angle scattering image related to at least a partial region of the object under inspection W. The second extraction algorithm may be used to process the exposure data obtained when the object under inspection W remains stationary in the inspection channel, so as to generate at least one of an absorption image, a phase image, or a small-angle scattering image related to at least a partial region of the object under inspection W. In such embodiments, at least one of the absorption image, the phase image, or the small-angle scattering image obtained from the two calculations may be compared and crossvalidated with each other, thereby improving inspection accuracy.

It should be understood that the various forms of processes shown above may be used, with steps reordered, added, or deleted. For example, the steps described herein may be performed in parallel, sequentially, or in a different order, as long as the desired results of the technical solutions provided by the present disclosure may be achieved, and no limitation is imposed herein.

In the technical solutions of the present disclosure, the collection, storage, use, processing, transmission, provision, disclosure, etc., of user personal information involved all comply with relevant laws and regulations and do not violate public order and good morals.

The foregoing specific embodiments are not intended to limit the scope of protection of the present disclosure. Those skilled in the art will appreciate that various modifications, combinations, sub-combinations, and substitutions may be made to the disclosed embodiments or examples according to design requirements and other factors. Any modification, equivalent substitution, and improvement within the spirit and principle of the present disclosure shall fall within the scope of protection of the present disclosure.

## Claims

1. A radiation imaging apparatus, comprising:
a radiation source configured to emit a radiation beam;
N rows of detectors configured to receive the radiation beam from the radiation source, wherein the radiation source and the N rows of detectors define an inspection channel, and N is an integer greater than 1; and
one or more gratings arranged in the inspection channel and between the radiation source and the detectors;
wherein each of the N rows of detectors extends along a transverse direction of the inspection channel, the N rows of detectors are arranged along an extension direction of the inspection channel, the one or more gratings extend in a plane substantially parallel to a plane in which the N rows of detectors are arranged, the one or more gratings are provided with a periodic structure, and the periodic structure is configured to diffract rays to generate an interference fringe, and an extension direction of a structural unit of the periodic structure forms a non-zero angle with the extension direction of the inspection channel.

2. The radiation imaging apparatus of claim 1, wherein the radiation imaging apparatus is configured to perform N exposures on a portion of an object under inspection with the radiation source emitting the radiation beam N times and the N rows of detectors detecting radiation signals transmitted through the portion of the object under inspection, when the object under inspection moves along the inspection channel, and wherein a number of exposures is equal to a number of rows of detectors.

3. The radiation imaging apparatus of claim 2, wherein the exposures are intermittent, and a movement distance of the portion of the object under inspection within a time interval between start time instants of two adjacent exposures is equal to a spacing between respective leading edges of adjacent rows of detectors, and the exposures comprise a plurality of intermittent exposures having a same exposure period.

4. The radiation imaging apparatus of claim 2, wherein for the portion of the object under inspection, the radiation imaging apparatus is configured to generate at least one of an absorption image, a phase image, or a small-angle scattering image related to at least a partial region of the object under inspection by using a first extraction algorithm to process exposure data from a first row of detectors among the N rows of detectors obtained at a first exposure, exposure data from an i-th row of detectors among the N rows of detectors obtained at an i-th exposure, and exposure data obtained at other completed exposures which serve as exposure data related to the partial region of the object under inspection, and wherein i is an integer and 1 < i ≤ N.

5. The radiation imaging apparatus of claim 1, wherein the radiation imaging apparatus is configured to perform an exposure on an object under inspection with the radiation source emitting the radiation beam to irradiate the object under inspection and the N rows of detectors detecting radiation signals transmitted through the object under inspection, when the object under inspection remains stationary in the inspection channel.

6. The radiation imaging apparatus of claim 5, wherein for at least a partial region of the object under inspection, the radiation imaging apparatus is configured to: extract, using a second extraction algorithm, exposure data from M adjacent rows of detectors among the N rows of detectors based on exposure data from each of the N rows of detectors, and combine the exposure data from M adjacent rows of detectors into a set of exposure data, so as to obtain N-M+1 sets of exposure data; and generate at least one of an absorption image, a phase image, or a small-angle scattering image related to the partial region of the object under inspection based on the N-M+1 sets of exposure data, and wherein M is an integer and 1 ≤ M ≤ N.

7. The radiation imaging apparatus of claim 1, wherein the one or more gratings comprise a first grating arranged between an object under inspection and the N rows of detectors.

8. The radiation imaging apparatus of claim 7, wherein the one or more gratings further comprise a second grating arranged between the object under inspection and the radiation source.

9. The radiation imaging apparatus of claim 8, wherein the one or more gratings further comprise a third grating arranged between the object under inspection and the N rows of detectors, and wherein a distance between the third grating and the N rows of detectors is different from a distance between the first grating and the N rows of detectors.

10. The radiation imaging apparatus of claim 1, wherein the N rows of detectors are spaced apart from each other along the inspection channel at equal predetermined intervals, or are arranged closely adjacent to each other.

11. The radiation imaging apparatus of claim 4, wherein the radiation source is a distributed multi-point source, and is configured to irradiate the object under inspection with a plurality of point sources of the distributed multi-point source emitting radiation beams from a plurality of angles.

12. The radiation imaging apparatus of claim 11, wherein the plurality of point sources of the distributed multi-point source are configured to emit the radiation beams separately to perform multiple exposures on the object under inspection.

13. A radiation imaging method, comprising:
irradiating an object under inspection using a radiation source; and
receiving, using N rows of detectors, a radiation beam from the radiation source, wherein the radiation source and the N rows of detectors define an inspection channel, and N is an integer greater than 1;
wherein each of the N rows of detectors extends along a transverse direction of the inspection channel, the N rows of detectors are arranged along an extension direction of the inspection channel, the one or more gratings extend in a plane substantially parallel to a plane where the N rows of detectors are arranged, the one or more gratings are provided with a periodic structure, and the periodic structure is configured to diffract rays to generate an interference fringe, and an extension direction of a structural unit of the periodic structure forms a non-zero angle with the extension direction of the inspection channel.

14. The radiation imaging method of claim 13, wherein the object under inspection moves along the inspection channel within the inspection channel, or the object under inspection remains stationary in the inspection channel.
